# EUROPEAN PATENT APPLICATION

(11) **EP 1 801 566 A1**
(43) Date of publication of application: **27.06.2007**
(21) Application number: 05270101.8
(22) Date of filing: 22.12.2005
(51) Int. Cl.: G01N 21/35

(54) **Gas temperature stabilisation for gas analyser**

(71) Applicant: Delphi Technologies, Inc., Troy, MI 48007 (US)
(72) Inventor: Kubis, Ruediger, 54329, Konz (DE)
(74) Representative: Jones, Keith William

(57) **Abstract**

Gas flow from a source such as an exhaust line (10) to an analyser such as an infrared absorption cell (12) is conditioned by a device (18) having a heating means with a positive temperature coefficient (PTC). The heating means may be a ceramic honeycomb PTC heater. Gas entering the analyser is at a constant temperature having a high degree of uniformity throughout the flow area.

## Description

This invention relates to a device and a method for stabilising and conditioning gas before the gas is analysed in a device such as an IR absorption cell.

It is know to use IR absorption techniques to measure pollutants in vehicle emissions. However, the accuracy of such techniques is highly dependent on knowing the temperature and pressure of the exhaust gas, as these parameters have a significant impact on the measuring signal.

A further factor limiting the accuracy of existing on-vehicle IR absorption measurement is that e gas flow in the measurement cell is not uniform. It is conventional for the measurement cell to be a cylinder with end windows, and the gas entrance and exit are off-axis. This leads to parts of the cell having areas of stagnant gas, which impacts on measurement accuracy.

The present invention provides a device for conditioning a gas flow to an infrared absorption cell, the device comprising a positive temperature co-efficient (PTC) heating element having multiple parallel gas flow channels.

From another aspect, the invention provides a method of conditioning a gas flow to an infrared absorption cell, comprising passing the gas flow through a PTC heating element having multiple parallel gas flow channels.

Preferably, the heating element is a ceramic honeycomb PTC heating element.

Further preferred features and advantages of the invention will be apparent from the following description and the claims.

An embodiment of the invention will now be described, by way of example only, with reference to the drawings, in which:
Fig. 1 is a schematic representation of an exhaust sensor system including one embodiment of a device of the present invention;
Fig. 2 shows an example of a honeycomb heater element;
Fig. 3 is a graph of a typical resistance-temperature characteristic of a PTC ceramic;
Fig. 4 shows a simulation of gas temperature profile within one-quarter of a device of the present invention; and
Fig. 5 is an end view of the simulated device of Fig. 4, showing the area of the simulation shaded.

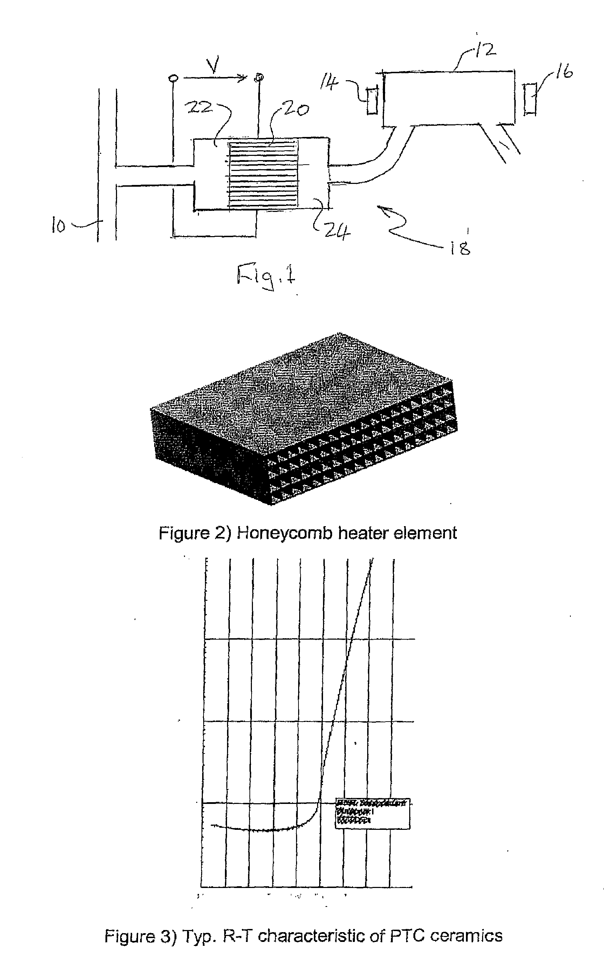

Referring to Fig. 1, exhaust gases are bled off from an exhaust conduit 10 and passed through an infrared absorption cell 12 of known type, having a light source 14 and detector 16 operating via end windows of the cell 12.

A gas conditioning device 18 is interposed between the exhaust conduit 10 and the measuring cell 12. The device 18 comprises a ceramic honeycomb PTC element 20 providing a multiplicity of parallel gas flow channels extending between an inlet manifold 22 and an outlet manifold 24. Opposite faces of the ceramic PTC element 20 are connected to opposite poles of a suitable voltage supply V.

Because of the positive temperature coefficient of resistance of such elements, a typical characteristic being shown in Fig. 3, the resistance rises and current falls with increasing gas temperature. Thus the exit temperature of the gas is self-limiting, the maximum temperature being determined by the ceramic material used. For IR absorption analysis of exhaust gas in an automotive application, a typical target gas temperature is about 110-130ºC, preferably about 120ºC. This is particularly preferred, as being the least temperature that safeguards against water condensation in the measuring cell while minimising thermal effects on the electronics.

The exhaust gas entering the conditioning device 18 will typically have a temperature about 70ºC, but this can vary widely. More importantly, the gas temperature can be highly non-uniform within the flow, and the physical arrangement of the flow conduits and the measuring cell can accentuate a non-uniform atmosphere within the cell. The conditioning device of the present invention serves the dual purpose of providing a constant temperature regardless of engine operating conditions, and providing a gas flow within the cell with a greatly enhanced uniformity of temperature distribution.

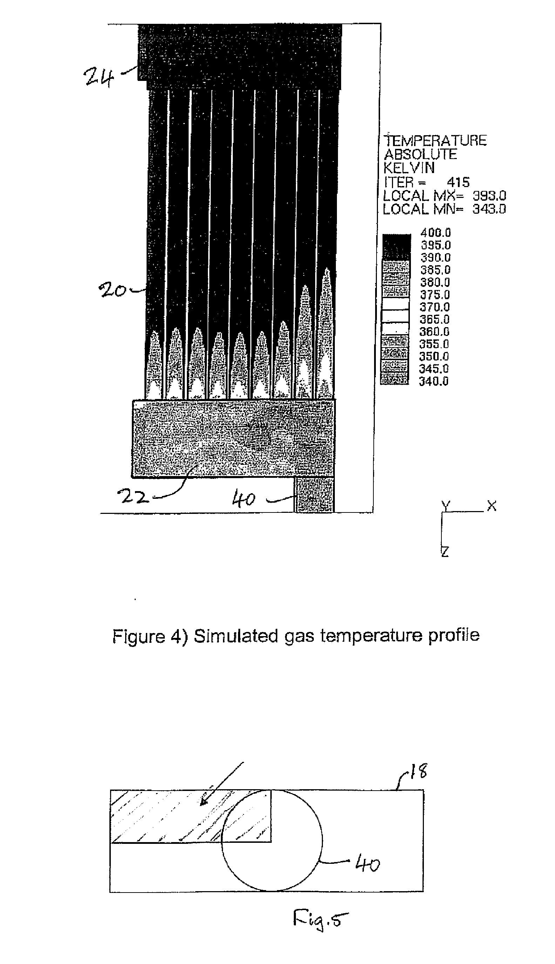

Fig. 4 shows the results of a simulation of the temperatures achieved within a device embodying the invention. The simulation is of one-quarter of an arrangement in which a cylindrical conduit 40 communicates with a rectangular conditioning device 18; see also Fig. 5, in which the area of the simulation is shaded. It will be noted that the temperature distribution across the inlet manifold 22 is significantly non-uniform. This causes the gas temperatures in the various flow passages 20 increase at different rates, but all reach the target temperature within a relatively short length, and the outlet temperature distribution is highly uniform.

It is a preferred feature of the invention that the passage length in the PTC heater is over-dimensioned, i.e. significantly longer than the point at which the temperature could be expected to reach a self-limiting value. Preferably the passage length is chosen such that in normal operation the target temperature is reached in less than half the passage length. This feature ensures stability and uniformity under varying operating conditions. The length should also be chosen such that the target temperature will be attained within that length even under the worst anticipated inlet condition, which in automotive use is typically taken to be a cold start at an ambient temperature of -40ºC

The simulation of Fig. 4 is for a gas flow of 5 1/min and an entrance temperature of 70ºC. The target temperature of 120ºC is reached in a length of only about 20mm.

Ceramic honeycomb PTC elements are well known per se. However, those which are currently commercially available are designed primarily for providing a space heater in minimum volume. They therefore operate at a higher temperature than is typical for the present invention. The design of a ceramic honeycomb PTC heater meeting parameters such as those discussed above, by appropriate choice of materials and dimensions, will be readily apparent to a person of ordinary skill in the relevant art.

The operation of the gas conditioning device and the absorption cell 12 may be further improved by cladding either or both with thermal insulation. A particularly preferred insulation material is FoamGlas® cellular glass by Pittsburgh Corning.

## Claims

1. A device for conditioning a gas flow to an infrared absorption cell, the device comprising a positive temperature co-efficient (PTC) heating element having multiple parallel gas flow channels.

2. A device according to claim 1, in which the heating element is a ceramic honeycomb PTC heating element.

3. A device according to claim 1 or claim 2, including an inlet manifold and an outlet manifold each communicating with said channels.

4. A device according to any preceding claim, in which the device is adapted to give a gas outlet temperature of 110-130ºC.

5. A device according to any preceding claim, in which the length of said channels is such that the desired gas outlet temperature is attained under the worst anticipated inlet condition.

6. A method of conditioning a gas flow to an infrared absorption cell, comprising passing the gas flow through a PTC heating element having multiple parallel gas flow channels.

7. A method according to claim 6, in which the heating element is a ceramic honeycomb PTC heating element.

8. A method according to claim 6 or claim 7, in which the gas is raised to an outlet gas temperature of 110-130ºC.

9. A method according to any of claims 6 to 8, in which the gas outlet temperature is attained with an inlet gas temperature down to -40ºC.

10. Use of a positive temperature coefficient ceramic honeycomb heater element for conditioning a flow of exhaust gas to an infrared absorption cell.
